# EUROPEAN PATENT APPLICATION

(11) **EP 2 009 076 A1**
(43) Date of publication of application: **31.12.2008**
(21) Application number: 08075759.4
(22) Date of filing: 13.05.2004
(51) Int. Cl.: C09K 8/10, C09K 8/68

(54) **Method for stimulating hydrocarbon production and reducing the production of water from a subterranean formation**

(30) Priority: 16.05.2003 US 440337
(62) Divisional of application: 04732656.6
(71) Applicant: Halliburton Energy Services, Inc., Duncan, OK 73533 (US)
(72) Inventor: Eoff, Larry Steven, Duncan, OK 73533 (US); Reddy, Bairreddy Raghava, Duncan, OK 73533 (US); Dalrymple, Eldon Dwyann, Duncan, OK 73533 (US)
(74) Representative: Curtis, Philip Anthony

(57) **Abstract**

Improved methods and solutions for treating water and hydrocarbon producing subterranean formations to reduce the water permeability thereof are provided. The improved aqueous solutions comprise a hydrophilic reactive polymer, a hydrophobic compound capable of reacting with the polymer in situ and a surfactant. The methods basically comprise preparing and introducing into the formation the aqueous solution followed by shutting in the formation in order to permit reaction of the polymer and the hydrophobic compound. The reaction product attaches to adsorption sites on surfaces within the porosity of the formation and reduces the water permeability thereof without substantially reducing the hydrocarbon permeability thereof. Additionally, the current invention provides a pre-reacted hydrophobically modified relative permeability modifier and formation stimulation/re-stimulation methods for using the same.

## Description

### BACKGROUND OF THE INVENTION

The present invention provides improvements in the production of hydrocarbons from subterranean formations. More precisely, the present invention provides improved solutions and methods for stimulating the production of hydrocarbons while reducing the production of water from a stimulated subterranean formation.

The production of water with hydrocarbons, i.e., oil and/or gas, from wells constitutes a major problem and expense in the production of the hydrocarbons. While hydrocarbon producing wells are usually completed in hydrocarbon producing formations, the formations frequently contain layers of water or may be located adjacent to water producing zones. The high mobility of the water often allows it to flow into the wellbore by way of natural fractures and/or high permeability streaks present in the formation. Over the life of such wells, the ratio of water to hydrocarbons recovered often becomes so high that the cost of producing the water, separating it from the hydrocarbons and disposing of it represents a significant economic loss.

In order to reduce the production of undesired water from hydrocarbon producing formations, aqueous polymer solutions containing cross-linking agents have been utilized heretofore. In the case of naturally fractured formations such aqueous polymer solutions have been pumped into the hydrocarbon producing formations so that they enter water zones within and adjacent to the formations and cross-link therein. The cross-linking of the polymer solutions forms stiff gels capable of stopping or reducing the flow of the undesired water. While the use of aqueous polymer solutions for reducing the production of undesired water has achieved varying degrees of success, the full blocking gels produced are not suitable for producing formation treatments unless the polymer solution can be placed solely in the offending water producing zone or zones therein. If a polymer solution is allowed to gel within a hydrocarbon producing zone, the cross-linked polymer gel formed will reduce or stop the flow of hydrocarbons in addition to the flow of water. Further, the selected placement of a polymer solution in a producing formation requires expensive, time-consuming zonal isolation placement technology. In addition, even when a polymer solution is properly placed in a water producing zone, the cross-linked gels formed often do not remain stable in the zone due to thermal degradation and/or differences in the adsorption characteristics of the polymer and associated cross-linker and the like.

Stimulation processes have long been used in the field of hydrocarbon production to increase the flow of hydrocarbons to the well bore. Typically, the stimulation process uses specialized fluids pumped at sufficient pressure to fracture the formation. Fracturing the formation increases the surface area available for fluid to flow to the bore hole. Unfortunately, when a formation contains high permeability streaks or nearby intervals capable of producing water, stimulation frequently leads to the undesired production of water with the hydrocarbons.

Recently, chemicals referred to as relative permeability modifiers have been utilized to decrease the production of water with hydrocarbons. That is, water permeability modifying chemicals such as polyacrylamide have been introduced into hydrocarbon and water producing formations so that the chemicals attach to adsorption sites on surfaces within the porosity of the formations. The presence of the chemicals in the formations has the effect of reducing the flow of water through the formations. The use of water permeability modifying chemicals in hydrocarbon and water producing formations to decrease the production of water involves less risk than other techniques such as blocking the flow of water with cross-linked polymers, and has the advantage that they do not require expensive zonal isolation techniques. However, the use of such hydrophilic water permeability modifying chemicals, e.g., polyacrylamides, have heretofore resulted in only small temporary reductions in water production and/or unacceptable levels of reduction in hydrocarbon production.

Thus, improvements are necessary in the methods and solutions used to reduce water permeability if water and hydrocarbon producing subterranean formations. Additionally, improved formation stimulation methods capable of stimulating production while also reducing the production of water from a formation are necessary.

### SUMMARY OF THE INVENTION

The current invention provides well treatment solutions capable of precluding or reducing the production of water from subterranean formations penetrated by a wellbore. In one embodiment, the well treatment solution comprises an aqueous well treatment solution comprising a hydrophilic reactive polymer, a hydrophobic compound capable of reacting with the hydrophilic reactive polymer and a sufficient quantity of a surfactant chosen for its ability to promote dissolution of the hydrophobic compound in the aqueous solution.

In one aspect the present invention provides an aqueous well treatment solution comprising an aqueous solution of a hydrophilic reactive polymer, a hydrophobic compound capable of reacting with the hydrophilic reactive polymer and a sufficient quantity of a surfactant capable of promoting the dissolution of the hydrophobic compound in the aqueous solution. The hydrophilic reactive polymer of the well treatment solution may be a homo-, co- or ter-polymer having at least one reactive amino group. The hydrophilic reactive polymer may be selected from the group consisting of polyethyleneimine, polyvinylamine, poly(vinylamine/vinyl alcohol), chitosan, polylysine and alkyl acrylate polymers. The alkyl acrylate polymer may comprise a polymer containing at least one monomer selected from the group consisting of dimethylaminoethyl methacrylate and dimethylaminopropyl methacrylamide. The hydrophilic reactive polymer may be poly-dimethylaminoethylmethacrylate. The hydrophobic compound may be selected from the group consisting of alkyl halides wherein the alkyl chain portion has from about 6 to about 30 carbons. The hydrophobic compound may be cetyl bromide. The surfactant may be selected from the group of anionic, cationic, amphoteric or neutral surfactants. The surfactant may be selected from the group consisting of alkyl ammonium surfactants, betaines, alkyl ether sulfates, alkyl ether sulfonates, and ethoxylated alcohols. The hydrophilic reactive polymer may comprise from about 0.1 to about 2.0 percent by weight of the aqueous solution. The hydrophilic reactive polymer may comprise from about 0.2 to about 1.5 percent, or more preferably from about 0.01 to about 1.0 percent, or even more preferably from about 0.02 to about 0.5 percent, by weight of the aqueous solution. The surfactant may comprise from about 0.1 to about 1.0 percent by weight of the aqueous solution. The well treatment solution may further comprise a pH adjusting agent selected from the group consisting of buffers, alkali metal hydroxides, alkali metal carbonates, alkali and metal phosphates. The well treatment solution may further comprise a hydrated galactomannan gelling agent selected from the group consisting of guar, hydroxyethylguar, hydroxypropylguar, carboxymethylguar, carboxymethylhydroxyethylguar and carboxymethylhydroxypropylguar. The hydrated galactomannan gelling agent may comprise from about 0.06 to about 0.72 percent by weight of the aqueous solution.

In another aspect the present invention provides an aqueous well treatment solution comprising: an aqueous solution of a hydrophilic reactive polymer, wherein the polymer is a homo-, co- or ter-polymer having at least one reactive amino group, a hydrophobic compound capable of reacting with the hydrophilic reactive polymer, a pH adjusting agent and a sufficient quantity of a surfactant capable of promoting the dissolution of the hydrophobic compound in the aqueous solution. The hydrophilic reactive polymer of the well treatment solution may be selected from the group consisting of polyethyleneimine, polyvinylamine, poly(vinylamine/vinyl alcohol), chitosan, polylysine and alkyl acrylate polymers. The alkyl acrylate polymer may comprise a polymer containing at least one monomer selected from the group consisting of dimethylaminoethyl methacrylate and dimethylaminopropyl methacrylamide. The hydrophilic reactive polymer may be is poly-dimethylaminoethylmethacrylate. The hydrophobic compound may be selected from the group consisting of alkyl halides wherein the alkyl chain portion has from about 6 to about 30 carbons. The hydrophobic compound may be cetyl bromide. The surfactant may be selected from the group consisting of alkyl ammonium surfactants, betaines, alkyl ether sulfates, alkyl ether sulfonates, and ethoxylated alcohols. The hydrophilic reactive polymer may comprise from about 0.1 to about 2.0 percent, or more preferably from about 0.2 to about 1.5 percent, or even more preferably from about 0.01 to about 1.0 percent, by weight of the aqueous solution. The hydrophobic compound may comprise from about 0.02 to about 0.5 percent by weight of the aqueous solution. The surfactant may comprise from about 0.1 to about 2.0 percent by weight of the aqueous solution. The pH adjusting agent may be selected from the group consisting of buffers, alkali metal hydroxides, alkali metal carbonates, and alkali metal phosphates. The well treatment solution may further comprise a hydrated galactomannan gelling agent selected from the group consisting of guar, hydroxyethylguar, hydroxypropylguar, carboxymethylguar, carboxymethylhydroxyethylguar and carboxymethylhydroxypropylguar. The hydrated galactomannan gelling agent may comprise from about 0.06 to about .072 percent by weight of the aqueous well treating solution.

In another aspect, the present invention provides an aqueous well treatment solution comprising an aqueous solution of a hydrophilic reactive polymer, a hydrophobic compound capable of reacting with the hydrophilic reactive polymer, a pH adjusting agent, a hydrated galactomannan gelling agent and a sufficient quantity of a surfactant capable of promoting the dissolution of the hydrophobic compound in the aqueous solution; the hydrophilic reactive polymer is a homo-, co- or terpolymer having at least one reactive amino group; the hydrophobic compound is selected from the group consisting of alkyl halides wherein the alkyl chain portion has from about 6 to about 30 carbons; and the surfactant is selected from the group consisting of alkyl ammonium surfactants, betaines, alkyl ether sulfates, alkyl ether sulfonates, and ethoxylated alcohols. The hydrophilic reactive polymer of the well treatment solution may be selected from the group consisting of polyethyleneimine, polyvinylamine, poly(vinylamine/vinyl alcohol), chitosan, polylysine and alkyl acrylate polymers. The alkyl acrylate polymer may comprise a polymer containing at least one monomer selected from the group consisting of dimethylaminoethyl methacrylate and dimethylaminopropyl methacrylamide. The hydrophobic compound may be cetyl bromide. The hydrophilic reactive polymer may comprise from about 0.1 to about 2.0 percent, or more preferably from about 0.2 to about 1.5 percent, or even more preferably from about 0.01 to about 1.0 percent by weight of the aqueous solution. The hydrophobic compound may comprise from about 0.02 to about 0.5 percent by weight of the aqueous solution. The surfactant may comprise from about 0.1 to about 2.0 percent by weight of the aqueous solution. The pH adjusting agent may be selected from the group consisting of buffers, alkali metal hydroxides, alkali metal carbonates, and alkali metal phosphates. The hydrated galactomannan gelling agent may be selected from the group consisting of guar, hydroxyethylguar, hydroxypropylguar, carboxymethylguar, carboxymethylhydroxyethylguar and carboxymethylhydroxypropylguar. The hydrated galactomannan gelling agent may comprise from about 0.06 to about .072 percent by weight of the aqueous well treating solution.

In another aspect the present invention provides a method for stimulating or re-stimulating a hydrocarbon producing formation penetrated by a wellbore comprising the steps of: forming an aqueous solution comprising a hydrophilic reactive polymer, a hydrophobic compound capable of reacting with the hydrophilic reactive polymer, and a sufficient quantity of a surfactant capable of promoting the dissolution of the hydrophobic compound in the aqueous solution; adjusting the pH to at least 8; and pumping the aqueous solution through the wellbore at a rate and pressure sufficient to fracture the hydrocarbon producing formation. The method may further comprise the step of adding to the aqueous solution a hydrated galactomannan gelling agent selected from the group consisting of guar, hydroxyethylguar, hydroxypropylguar, carboxymethylguar, carboxymethylhydroxyethylguar and carboxymethylhydroxypropylguar. The method may further comprise the step of shutting in the wellbore for about 1 minute to about 24 hours. The method may further comprise the step of pumping a crosslinked gelled fluid through the wellbore after the aqueous solution. The hydrophilic reactive polymer may be selected from the group consisting of polyethyleneimine, polyvinylamine, poly(vinylamine/vinyl alcohol), chitosan, polylysine and alkyl acrylate polymers. The alkyl acrylate polymer may comprise a polymer containing at least one monomer selected from the group consisting of dimethylaminoethyl methacrylate and dimethylaminopropyl methacrylamide. The hydrophobic compound may be selected from the group consisting of alkyl halides wherein the alkyl chain portion has from about 6 to about 30 carbons. The surfactant may be selected from the group consisting of alkyl ammonium surfactants, betaines, alkyl ether sulfates, alkyl ether sulfonates, and ethoxylated alcohols. The hydrophilic reactive polymer may comprise from about 0.1 to about 2.0 percent by weight of the aqueous solution. The hydrophobic compound may comprise from about 0.01 to about 1.0 percent by weight of the aqueous solution. The surfactant may comprise from about 0.1 to about 2.0 percent by weight of the aqueous solution. The method may further comprise the step of pumping sufficient aqueous solution into the resulting fracture to reduce formation permeability to water.

In another aspect the present invention provides a method for stimulating or re-stimulating a hydrocarbon producing formation penetrated by a wellbore comprising the steps of forming an aqueous solution comprising a hydrophilic reactive polymer, wherein the hydrophilic reactive polymer is a homo-, co- or ter-polymer having at least one reactive amino group, a hydrophobic compound capable of reacting with the hydrophilic reactive polymer, and a sufficient quantity of a surfactant capable of promoting the dissolution of the hydrophobic compound in the aqueous solution; adjusting the pH to at least 8; pumping the aqueous solution through the wellbore at a rate and pressure sufficient to fracture the hydrocarbon producing formation; and pumping a crosslinked gelled fluid through the wellbore after the aqueous solution. The method may further comprise the step of adding to the aqueous solution a hydrated galactomannan gelling agent selected from the group consisting of guar, hydroxyethylguar, hydroxypropylguar, carboxymethylguar, carboxymethylhydroxyethylguar and carboxymethylhydroxypropylguar. The method may further comprise the step of shutting in the wellbore for about 1 minute to about 24 hours. The hydrophilic reactive polymer may be selected from the group consisting of polyethyleneimine, polyvinylamine, poly(vinylamine/vinyl alcohol), chitosan, polylysine and alkyl acrylate polymers. The alkyl acrylate polymer may comprise a polymer containing at least one monomer selected from the group consisting of dimethylaminoethyl methacrylate and dimethylaminopropyl methacrylamide. The hydrophobic compound may be selected from the group consisting of alkyl halides wherein the alkyl chain portion has from about 6 to about 30 carbons. The surfactant may be selected from the group consisting of alkyl ammonium surfactants, betaines, alkyl ether sulfates, alkyl ether sulfonates, and ethoxylated alcohols. The hydrophilic reactive polymer may comprise from about 0.1 to about 2.0 percent by weight of the aqueous solution. The hydrophobic compound may comprise from about 0.01 to about 1.0 percent by weight of the aqueous solution. The surfactant may comprise from about 0.1 to about 2.0 percent by weight of the aqueous solution. The method may further comprise the step of pumping sufficient aqueous solution into the resulting fracture to reduce formation permeability to water.

In another aspect the present invention provides an aqueous well treatment solution comprising: a hydrophobically modified, water soluble relative permeability modifier wherein the hydrophobically modified, water soluble relative permeability modifier comprises about 0.05% to about 1.0% by weight of the aqueous well treatment solution; and a hydrated galactomannan gelling agent comprising about 0.06% to about 0.72% by weight of the aqueous solution. The hydrated galactomannan gelling agent may be selected from the group consisting of guar, hydroxyethylguar, hydroxypropylguar, carboxymethylguar, carboxymethylhydroxyethylguar and carboxymethylhydroxypropylguar. The hydrophobically modified, water soluble relative permeability modifier may comprise a hydrophilic portion selected from the group consisting of polyethyleneimine, polyvinylamine, poly(vinylamine/vinyl alcohol), chitosan, polylysine; and a hydrophobic portion wherein the hydrophobic portion is an alkyl chain having from about 6 to about 30 carbons. The hydrophobically modified, water soluble relative permeability modifier may comprise at least one hydrophilic monomer selected from the group consisting of: acrylamide, 2-acrylamido-2-methyl propane sulfonic acid, N,N-dimethylacrylamide, vinyl pyrrolidone, dimethylaminoethyl methacrylate, acrylic acid, dimethylaminopropylmethacrylamide, trimethylammoniumethyl methacrylate chloride, methacrylamide hydroxyethyl acrylate; and at least one monomer selected from the group consisting of: alkyl acrylates, alkyl methacrylates, alkyl acrylamides alkyl methacrylamides wherein the alkyl radicals have from about 4 to about 22 carbon atoms, alkyl dimethylammoniumethyl methacrylate bromide, alkyl dimethylammoniumethyl methacrylate chloride and alkyl dimethylammoniumethyl methacrylate iodide wherein the alkyl radicals have from about 4 to about 22 carbon atoms and alkyl dimethylammonium-propylmethacrylamide bromide, alkyl dimethylammonium propylmethacrylamide chloride and alkyl dimethylammonium-propylmethacrylamide iodide wherein the alkyl groups have from about 4 to about 22 carbon atoms.

In another aspect the present invention provides a method for stimulating or re-stimulating hydrocarbon production from a subterranean formation penetrated by a wellbore and for reducing the water permeability of the subterranean formation comprising the steps of: pumping an aqueous well treatment solution comprising a hydrophobically modified, water soluble relative permeability modifier through the wellbore at a rate and pressure sufficient to fracture the formation. The method may further comprise the step of gelling the hydrophobically modified, water soluble relative permeability modifier by addition of a hydrated galactomannan gelling agent selected from the group consisting of guar, hydroxyethylguar, hydroxypropylguar, carboxymethylguar, carboxymethylhydroxyethylguar and carboxymethylhydroxypropylguar. The method may further comprise the step of pumping a crosslinked gelled fluid into the formation after the hydrophobically modified, water soluble relative permeability modifier. The hydrophobically modified, water soluble relative permeability modifier may be the reaction product of a hydrophilic reactive polymer and a hydrophobic compound. The hydrophobic compound may be selected
from the group consisting of alkyl halides wherein the alkyl chain portion has from about 6 to about 30 carbons. The hydrophobically modified, water soluble relative permeability modifier may comprise a hydrophilic portion selected from the group consisting of polyethyleneimine, polyvinylamine, poly(vinylamine/vinyl alcohol), chitosan, polylysine and a hydrophobic portion wherein the hydrophobic portion is an alkyl chain having from about 6 to about 30 carbons. The method may further comprise the step of pumping sufficient aqueous solution into the resulting fracture to reduce formation permeability to water. The hydrophobically modified, water soluble relative permeability modifier may comprise at least one hydrophilic monomer selected from the group consisting of: acrylamide, 2-acrylamido-2-methyl propane sulfonic acid, N,N-dimethylacrylamide, vinyl pyrrolidone, dimethylaminoethyl methacrylate, acrylic acid, dimethylaminopropylmethacrylamide, trimethylammoniumethyl methacrylate chloride, methacrylamide hydroxyethyl acrylate; and at least one monomer selected from the group consisting of: alkyl acrylates, alkyl methacrylates, alkyl acrylamides alkyl methacrylamides wherein the alkyl radicals have from about 4 to about 22 carbon atoms, alkyl dimethylammoniumethyl methacrylate bromide, alkyl dimethylammoniumethyl methacrylate chloride and alkyl dimethylammoniumethyl methacrylate iodide wherein the alkyl radicals have from about 4 to about 22 carbon atoms and alkyl dimethylammonium-propylmethacrylamide bromide, alkyl dimethylammonium propylmethacrylamide chloride and alkyl dimethylammonium-propylmethacrylamide iodide wherein the alkyl groups have from about 4 to about 22 carbon atoms. Additionally, the current invention provides a well treatment solution for precluding or at least reducing the production of water from a hydrocarbon producing subterranean formation. The well treatment solution is an aqueous solution, comprising a pH adjusting agent, a hydrophilic reactive polymer in the form of a homo-, co- or ter-polymer having at least one reactive amino group. Additionally, the solution comprises a hydrophobic compound capable of reacting in situ during fracture stimulation with the hydrophilic reactive polymer to form a hydrophobically modified polymer. Preferred hydrophobic compounds are alkyl halides having an alkyl chain length of about 6 to about 30 carbons. Typically, the solution further comprises a surfactant capable of promoting the dissolution of the hydrophobic compound within the aqueous solution. Suitable surfactants include, but are not necessarily limited to alkyl ammonium surfactants, betaines, alkyl ether sulfates, alkyl ether sulfonates, and ethoxylated alcohols. Optionally, the well treatment solution may be gelled by the addition of a hydrated galactomannan gelling agent.

The current invention also provides improved methods for stimulating or re-stimulating a hydrocarbon producing formation using an aqueous solution capable of reducing or precluding the production of water from a subterranean formation. The aqueous solution is pumped into the wellbore at a rate and pressure sufficient to fracture the formation.

The method of the current invention prepares an aqueous solution comprising a hydrophilic reactive polymer and a hydrophobic compound capable of reacting with the hydrophilic reactive polymer to form a hydrophobically modified polymer. In this embodiment, the reaction preferably occurs in situ and is facilitated by use of a pH adjusting agent capable of providing a pH of about 8 or higher to the aqueous solution containing the reactive polymers. Additionally, the aqueous solution preferably contains a surfactant selected to promote the dissolution of the hydrophobic compound within the aqueous solution. The aqueous solution may be followed with a crosslinked gelled fluid to extend the fractures into the subterranean formation and transport proppant into the fractures.

In an alternative embodiment the current invention provides an improved well treatment solution comprising a pre-reacted hydrophobically modified, water soluble relative permeability modifier (RPM). The well treatment fluid may optionally be in the form of a gelled fluid containing hydrated galactomannan gelling agent. Typically, the well treatment solution comprises about 0.05% to about 1.0% hydrophobically modified RPM by weight and from about 0.06% to about 0.72% gelling agent by weight.

Additionally, the current invention provides a method for stimulating or re-stimulating hydrocarbon production from a subterranean formation while simultaneously treating the formation to selectively reduce the permeability of the formation to the flow of water. The method of the current invention pumps a pre-reacted hydrophobically modified, water soluble RPM as an aqueous solution into the wellbore at a rate and pressure sufficient to fracture the formation. If formation conditions dictate the use of a gelled fluid, then the aqueous solution may be gelled by the addition of a hydrated galactomannan gelling agent. When stimulating or re-stimulating the formation, the aqueous solution may be followed with a crosslinked gelled fluid to extend the created fractures into the subterranean formation and transport proppant into the fractures. Use of the pre-reacted hydrophobically modified RPM eliminates the need for a surfactant in the well treatment solution and permits operation at a lower pH in the downhole environment.

### DESCRIPTION OF THE PREFERRED EMBODIMENTS

The solutions and methods of the current invention are applicable in both newly drilled formations and in formations requiring re-stimulation. The solutions of the current invention are particularly useful for formation re-stimulations where hydrocarbons will be present in the formation zones. In contrast to other permeability modification solutions, the current invention retains its effectiveness even in the presence of hydrocarbons.

### I. Well Treatment Solutions

One embodiment of the current invention provides a permeability modifying aqueous well treatment solution comprising a hydrophilic reactive polymer, a hydrophobic compound selected for its ability to react with the hydrophilic reactive polymer and a surfactant selected for its ability to promote the dissolution of the hydrophobic compound in the aqueous solution. Optionally, the aqueous solution may be gelled by the addition of a hydrated galactomannan gelling agent. Whether or not the aqueous solution is gelled, the solution will contain a sufficient quantity of pH adjusting agent to maintain the pH at about 8 or greater. Preferred pH adjusting agents include buffers, alkali metal hydroxides, alkali metal carbonates, alkali metal phosphates and other similar compounds known to those skilled in the art.

The water utilized to form the aqueous solutions of this invention can be fresh water, salt water, sea water, brine or any other aqueous liquid which does not adversely react with other components of the treating fluid. The water used in well treating fluids normally contains one or more salts for inhibiting the swelling of clays in the subterranean formations or zones being treated or to weight the treating fluid. The most common clay inhibiting salt utilized is potassium chloride, but other salts can also be used.

The galactomannan gelling agents suitable for use in accordance with the present invention are the naturally occurring gums and their derivatives such as guar, locust bean, tara, honey locust, tamarind, karaya, tragacanth, carrageenan and the like. These gums are generally characterized as containing a linear backbone having various amounts of galactose units attached thereto. The gums can also be characterized as having one or more functional groups such as cis-hydroxyl, hydroxyl, carboxyl, sulfate, sulfonate, amino or amide. Preferred galactomannan gelling agents suitable for use in the current invention include, one or more gelling agents selected from the group of guar, hydroxyethylguar, hydroxypropylguar, carboxymethylguar, carboxymethylhydroxyethylguar and carboxymethylhydroxypropylguar. Of these, guar is the most preferred.

When it is desired to gel the aqueous solution, one or more of the above mentioned glactomannan gelling agents are dissolved in water, the gelling agents are hydrated and a viscous aqueous gel is formed. When used, the galactomannan gelling agent or agents are dissolved in the aqueous solution in an amount in the range of from about 0.06% to about 0.72% by weight, more preferably in an amount in the range of from about 0.12% to about 0.36%, most preferably about 0.30%.

Due to the relative insolubility of hydrophobic compounds in aqueous solutions, the current invention preferably includes a surfactant selected for its ability to promote the dissolution of the hydrophobic compound in the aqueous solution. In general, the surfactants can be anionic, cationic, amphoteric or neutral. Thus, surfactants suitable for use in the current invention include, but are not limited to, alkyl ammonium surfactants, betaines, alkyl ether sulfates, alkyl ether sulfonates, and ethoxylated alcohols. Particularly preferred surfactants include alkyl ether sulfonates. Typically, the surfactant will be present within the aqueous solution in amounts ranging from about 0.1 % to about 2.0 % by weight.

The hydrophilic reactive polymers suitable for use in the aqueous solutions of the current invention are preferably polymers containing reactive amino groups in the polymer backbone or as pendant groups. A more preferable polymer contains dialkyl amino pendant groups. Most preferably the polymer contains a dimethyl amino pendant group and contains at least one monomer selected from dimethylaminoethyl methacrylate or dimethylaminopropyl methacrylamide. Suitable polymers include homo-, co- or terpolymers such as but not limited to polyethyleneimine, polyvinylamine, poly(vinylamine/vinyl alcohol), chitosan, polylysine and alkyl acrylate polymers in general. Non-limiting examples of specific alkyl acrylate polymers include polydimethylaminoethyl methacrylate, polydimethylaminopropyl methacrylamide, poly(acrylamide/dimethylaminoethyl methacrylate), poly(acrylamide/dimethylaminopropyl methacrylamide), poly(acrylic acid/dimethylaminoethyl methacrylate). The most preferred polymers are polydimethylaminoethyl methacrylate and polydimethylaminopropyl methacrylamide. As noted above, the in situ reaction of the hydrophilic polymer with a hydrophobic compound will generate a relative permeability modifier.

The preferred hydrophobic compounds suitable for use in the aqueous solutions of the current invention include but are not necessarily limited to alkyl halides. Preferably, the alkyl chain portion of the hydrophobic compound has from about 6 to about 30 carbons. A particularly preferred hydrophobic compound is cetyl bromide.

In general, the hydrophilic reactive polymer will comprise from about 0.1 to about 2.0 percent by weight of the aqueous solution and the hydrophobic compound will comprise from about 0.01 to about 1.0 percent by weight of the aqueous solution. Preferably, the hydrophilic reactive polymer will comprise from about 0.2 to about 1.5 percent by weight and the hydrophobic compound will comprise from about 0.02 to about 0.5 percent by weight.

The reaction of the hydrophilic reactive polymer and hydrophobic compound yields a hydrophobically modified polymer, i.e. a hydrophobically modified, water soluble, relative permeability modifier (RPM). Typically the resulting polymers have molecular weights in the range of about 250,000 to about 3,000,000. The charged portion of the resulting compound promotes attachment of the compound to the porosities of the subterranean formation. As a result, the permeability of the treated portion of the formation to water is reduced or eliminated while the permeability of the formation to hydrocarbons is substantially unchanged.

Thus, a preferred aqueous solution for reducing the water permeability of a subterranean formation comprises a hydrophilic reactive polymer such as poly-dimethylaminoethylmethacrylate, a hydrophobic compound such as cetyl bromide and a surfactant selected to promote the dissolution of the cetyl bromide in the aqueous solution. The concentration of poly-dimethylaminoethylmethacrylate in the solution may range from about 0.1 to about 2.0 percent by weight. Preferably, the poly-dimethylaminoethylmethacrylate comprises about 0.2 % by weight. The concentration of cetyl bromide may range from about 0.01 to about 1.0 percent by weight. The preferred concentration of cetyl bromide is about 0.1 % by weight. The preferred surfactant for use with cetyl bromide is an alkyl ether sulfonate and the concentration of the alkyl ether sulfonate may range from about 0.01 to about 1.0 percent by weight. As noted above, the solution may optionally contain a hydrated galactomannan gelling agent in an amount ranging from about 0.06% to about 0.72% by weight. Additionally, the solution may optionally contain any suitable proppant known to those skilled in the art.

In an alternative embodiment, the current invention provides an aqueous well treatment fluid comprising a pre-reacted hydrophobically modified, water soluble relative permeability modifier (pre-reacted hydrophobically modified RPM). In this embodiment, the pre-reacted hydrophobically modified RPM is preferably the reaction product of a hydrophilic reactive polymer and a hydrophobic compound. Hydrophilic reactive polymers suitable for use in the aqueous solutions of the current invention are preferably polymers containing reactive amino groups in the polymer backbone or as pendant groups. A more preferable polymer contains dialkyl amino pendant groups. Most preferably the polymer contains a dimethyl amino pendant group and contains at least one monomer selected from dimethylaminoethyl methacrylate or dimethylaminopropyl methacrylamide. Suitable polymers include homo-, co- or terpolymers. Examples of such polymers include but are not limited to polyethyleneimine, polyvinylamine, poly(vinylamine/vinyl alcohol), chitosan, polylysine and alkyl acrylate polymers in general. Additional examples of alkyl acrylate polymers include polydimethylaminoethyl methacrylate, polydimethylaminopropyl methacrylamide, poly(acrylamide/dimethylaminoethyl methacrylate), poly(acrylamide/dimethylaminopropyl methacrylamide), poly (acrylic acid/dimethylaminoethyl methacrylate). The most preferred polymers are polydimethylaminoethyl methacrylate and polydimethylaminopropyl methacrylamide.

Additional polymers useful in this embodiment of the current invention are preferably prepared from a variety of hydrophilic monomers and hydrophobically modified hydrophilic monomers. Examples of particularly suitable hydrophilic monomers which can be utilized include, but are not limited to, acrylamide, 2-acrylamido-2-methyl propane sulfonic acid, N,N-dimethylacrylamide, vinyl pyrrolidone, dimethylaminoethyl methacrylate, acrylic acid, dimethylaminopropylmethacrylamide, vinyl amine, vinyl acetate, trimethylammoniumethyl methacrylate chloride, methacrylamide and hydroxyethyl acrylate. Of these, acrylamide, 2-acrylamido-2-methyl propane sulfonic acid, acrylic acid, dimethylaminoethyl methacrylate, dimethylaminopropyl methacrylamide and vinyl pyrrolidone are preferred.

A variety of hydrophobically modified hydrophilic monomers can also be utilized to form the polymers useful in accordance with this invention. Particularly suitable hydrophobically modified hydrophilic monomers include, but are not limited to, alkyl acrylates, alkyl methacrylates, alkyl acrylamides and alkyl methacrylamides wherein the alkyl radicals have from about 4 to about 22 carbon atoms, alkyl dimethylammoniumethyl methacrylate bromide, alkyl dimethylammoniumethyl methacrylate chloride and alkyl dimethylammoniumethyl methacrylate iodide wherein the alkyl radicals have from about 4 to about 22 carbon atoms and alkyl dimethylammoniumpropyl methacrylamide bromide, alkyl dimethylammonium propylmethacrylamide chloride and alkyl dimethylammoniumpropyl methacrylamide iodide wherein the alkyl groups have from about 4 to about 22 carbon atoms. Of these, octadecyldimethylammoniumethyl methacrylate bromide, hexadecyldimethylammoniumethyl methacrylate bromide, hexadecyldimethylammoniumpropyl methacrylamide bromide, 2-ethylhexyl methacrylate and hexadecyl methacrylamide are preferred.

Polymers that are useful in accordance with the present invention can be prepared by polymerizing any one or more of the hydrophilic monomers with any one or more of the hydrophobically modified hydrophilic monomers. Methods for preparing such polymers are known to those skilled in the art as represented by U.S. Patent No. 6,476,169 incorporated herein by reference.

Accordingly, suitable polymers have estimated molecular weights in the range of from about 250,000 to about 3,000,000 and have mole ratios of the hydrophilic monomer(s) to the hydrophobically modified hydrophilic monomer(s) in the range of from about 99.98:0.02 to about 90:10. Particularly suitable polymers having molecular weights and mole ratios in the ranges set forth above include, but are not limited to, acrylamide/octadecyldimethylammoniumethyl methacrylate bromide copolymer, dimethylaminoethyl methacrylate/hexadecyldimethylammoniumethyl methacrylate bromide copolymer, dimethylaminoethyl methacrylate/vinyl pyrrolidone/hexadecyldimethylammoniumethyl methacrylate bromide terpolymer and acrylamide/2-acrylamido-2-methyl propane sulfonic acid/2-ethylhexyl methacrylate terpolymer. Of these, a dimethylaminoethyl methacrylate/hexadecyldimethylammoniumethyl methacrylate bromide copolymer having a mole ratio of hydrophilic monomer to hydrophobically modified hydrophilic monomer of 95:5 is a preferred pre-reacted hydrophobically modified RPM.

Following preparation of the hydrophobically modified RPM, the hydrophobically modified RPM is added to water in a sufficient quantity to yield a solution having from about 0.05% to about 1.0% by weight. Water suitable for use in this embodiment of the current invention is defined above. Likewise this embodiment of the current invention may also contain salts suitable for inhibiting the swelling of clays. Additionally, the galactomannan gelling agents described above may be used in amounts ranging from about 0.06% to about 0.72% by weight. Preferably, the concentration of the galactomannan gelling agent will be in the range of about 0.12% to about 0.36% by weight with the most preferred concentration being about 0.30% by weight. Further, the solution may optionally contain any suitable proppant known to those skilled in the art.

Unlike the well treatment solution wherein the hydrophobically modified RPM is prepared in situ, this embodiment of the current invention does not require a surfactant in the well treatment solution, as the hydrophobically modified RPM already exists prior to injection downhole. Further, the solution will not require a pH adjusting agent capable of maintaining the pH at about 8 or greater. Thus, the well treatment solution comprising the pre-reacted hydrophobically modified RPM can be adjusted to a pH more suited to the environment of the formation. Typically, the pH of the well treatment solution comprising the pre-reacted hydrophobically modified RPM will be between about 4 and about 8.

As known to those skilled in the art, the aqueous solutions of the current invention may also contain other well treatment compounds such as but not necessarily limited to scale inhibitors, clay stabilizers, and corrosion inhibitors.

### II. Treating a Hydrocarbon Formation with Hydrophobically Modified RPM

The current invention also provides methods for stimulating or re-stimulating hydrocarbon producing formations. The methods of the current invention preclude or at least reduce the production of water from a hydrocarbon formation. The methods of the current invention comprise the injection of the aqueous well treatment solutions described above through the wellbore, into the hydrocarbon producing formation. Preferably, the aqueous well treatment solution is injected ahead of a fracture stimulation fluid. The injection rate of the aqueous well treatment solution is substantially equivalent to the injection rate of the fracture stimulation fluid. Once in the formation, the hydrophobically modified RPM bonds itself to the matrix.

In one embodiment, the method of the current invention injects an aqueous well treatment solution comprising a hydrophilic reactive polymer and a hydrophobic compound into the formation. According to this method, the well treatment solution is placed in the formation and the hydrophilic reactive polymer and the hydrophobic compound are allowed to react in situ. The in situ reaction generally is effected at a formation temperature in excess of 23°C (75° F) and preferably in excess of about 37° C (100° F). To facilitate the rapid formation of the hydrophobically modified RPM, the pH of the well treatment solution is adjusted to about 8 or higher by the addition of an alkaline agent such as caustic or the like. Preferably the pH is adjusted to a level above about 9.5 and most preferably about 11-12.

In another preferred embodiment, the current invention injects a well treatment solution comprising a hydrophobically modified RPM. According to this method, the pH of the well treatment solution can be adjusted to a level lower than 8.0, if appropriate for the particular formation.

Either method may be used to stimulate the production of hydrocarbons from subterranean formations. When initially stimulating a formation, the injection of either aqueous well treatment solution is normally followed by a crosslinked gelled treatment fluid to extend fractures into the subterranean formation from the wellbore. In one embodiment, the crosslinked gelled treatment fluid also displaces or drives the aqueous well treatment solution into the resulting fractures.

The method of the current invention utilizing a solution comprising the hydrophilic reactive polymer and hydrophobic compound will be described first. In this method, the well treatment solution is pumped into the formation at rates sufficient to create a fracture and the solution is allowed to leak off into the matrix of the formation. This solution is normally followed by a crosslinked, proppant laden fluid. Following fracturing operations, a shut-in period of time may be necessary to permit the in situ reaction of the compounds. The requirement of a shut-in period will be determined based on downhole temperature and measured depth of the wellbore. The subsequent in situ reaction generates the hydrophobically modified RPM within the wellbore or the matrix of the formation. The resulting hydrophobically modified RPM bonds to the matrix of the formation thereby at least reducing the formation permeability to water.

When the aqueous well treatment solution comprises a hydrophilic reactive polymer and a hydrophobic compound, the solution may additionally include a quantity of a clay control additive such as potassium chloride or tetramethylammonium chloride or the like. Additionally, the solution preferably contains a pH adjusting agent such as caustic or the like to raise the pH to a level of about 8 or higher and most preferably to a range of about 11 to about 12. Adjustment of the pH of the solution to the indicated range will enhance the reaction rate of the hydrophilic reactive polymer and the alkyl halide. Additionally, a surfactant is commonly added to promote dissolution of the hydrophobic compound in the aqueous well treatment solution.

As noted above, the current invention also provides for displacement of the aqueous solution into the formation when pressure is exerted on the solution by a gelled fluid or a crosslinked gelled fluid subsequently pumped downhole. The water and gelling agents of the crosslinked gelled fluid used to fracture, i.e. stimulate, the formation may be any of those previously described or known to those skilled in the art. Preferably the crosslinking agent comprises a borate composition. The borate composition acts as a buffering agent for the treating fluid and as crosslinking promoter for the hydrated galactomannan gelling agent in the treating fluid. Preferably the borate crosslinking composition is a liquid solution generally comprised of water, a soluble boron source such as boric acid and an alkanolamine or alkylamine. The water utilized in forming the borate composition is preferably fresh water, but other aqueous liquids can be utilized so long as they do not adversely react with or otherwise affect other components of the borate composition or the treating fluid formed therewith. The water can include one or more freezing point depressants such as ethylene glycol, propylene glycol, alcohols or the like to prevent the borate composition from freezing in cold weather. Preferably, ethylene glycol is combined with the water used in an amount of 50% by weight of the resulting solution. This concentration of ethylene glycol depresses the freezing point of the borate composition to less than about -28° C (-20° F). The term "water" when used herein relating to the borate composition means water or other suitable aqueous liquid with or without one or more freezing point depressants dissolved therein. The water is preferably present in the borate composition in an amount in the range of from about 96% to about 5% by weight of the composition, most preferably about 60%.

The boron source can comprise substantially any boron containing compound capable of yielding borate in a solution maintained at a pH above about 7. The boron source can be provided by, for example, boric acid, boric oxide, pyroboric acid, metaboric acid, borax, sodium tetraborate and the like. For simplicity, reference will hereinafter be made to borate or boron content as boric acid or boric acid equivalents. That is, if a weight percentage is specified for boron content as boric acid, it is to be understood that a chemical equivalent amount of, for example, borax or sodium tetraborate could be substituted for the boric acid.

The boron source is preferably present in the crosslinking composition in an amount as boric acid in the range of from about 3% to about 82% by weight of the composition, most preferably in an amount of about 30%.

A variety of alkanolamines or alkylamines can be utilized in the borate crosslinking composition, but the quantity of boron in the composition is reduced as the molecular weight of the amine included in the composition increases. Thus, it is preferred that a relatively low molecular weight alkanolamine be used such as an ethanolamine. The most preferred low molecular weight alkanolamine is mono-ethanolamine. The use of a low molecular weight alkanolamine in the borate composition produces the further benefit of making the composition cold weather stable, i.e., the composition without a freezing point depressant therein does not crystallize or the like at low temperatures down to about -15° C (5° F). Other suitable alkanolamines include diethanolamine, 1-amino-2-propanol, 1-amino-2-butanol and the like. The alkylamines can comprise an aliphatic polyamine such as, for example, ethylenediamine, diethylenetriamine, triethylenetetraamine, 1,2-diaminopropane, tetraethylenepentamine and the like. The alkanolamine or alkylamine is generally present in the crosslinking and buffering composition in an amount in the range of from about 1 % to about 13% by weight of the composition. When mono-ethanolamine is utilized, it is preferably present in the composition in an amount of about 10% by weight of the composition.

A particularly preferred highly concentrated, stable crosslinking composition useful in accordance with this invention is comprised of water present in an amount of about 60% by weight of the composition, boron calculated as boric acid present in an amount of about 30% by weight of the composition and mono-ethanolamine present in an amount of about 10% by weight of the composition. This composition is stable and is easily pumped and metered at low temperatures. The borate ion concentration in the composition is very high, and the composition has the ability to buffer the resulting treating fluid to a pH between about 8.4 and 9 without the need for any other chemicals such as caustic, sodium carbonate or other buffer.

The crosslinking composition comprised of water, a boron source and alkanolamine or alkylamine is present in the borate crosslinked gelled aqueous well treating fluids of this invention in an amount in the range of from about 0.05% to about 0.8% by weight of water in the treating fluids, preferably in an amount in the range of from about 0.15% to about 0.4%.

A particularly preferred borate crosslinked gelled aqueous well treating fluid of this invention is comprised of water, hydrated guar present in an amount of about 0.30% by weight of the water and the preferred borate composition for buffering the treating fluid and crosslinking the hydrated guar comprised of water, boric acid and mono-ethanolamine described above present in the treating fluid in an amount of about 0.2% by weight of the water.

As will be understood by those skilled in the art, a variety of conventional additives can be included in the well treating fluids of this invention such as gel stabilizers, gel breakers, clay stabilizers, bactericides, fluid loss additives, proppants, such as sand, and the like which do not adversely react with the treating fluids or prevent their use in a desired manner.

Thus, in one embodiment the improved method of the present invention for treating a subterranean formation penetrated by a wellbore comprises the steps of preparing an aqueous treating fluid (which optionally can be gelled) comprising a hydrophilic reactive polymer and a hydrophobic compound and preparing a proppant laden, crosslinked, gelled aqueous treatment fluid. The prepared fluids are pumped into the subterranean formation at rates and pressures sufficient to fracture the formation. Optionally, the aqueous treating fluid may contain a proppant.

Depending on wellbore and formation conditions, a shut-in period of one minute to several hours may be required to permit the in situ reaction of the hydrophilic reactive polymer and the hydrophobic compound. Typically, the length of the borehole and the downhole temperature will determine the length of any shut-in period. For example, a deep borehole with temperatures in the range of about 93° C (200° F) or greater may not require a shut-in period. In general, shallow, cooler formations will require longer shut-in periods possibly extending up to 24 hours. Those skilled in the art will be able to readily determine the necessity for and the time period of any shut-in periods. During the shut-in period or the transport time downhole, the hydrophilic reactive polymer and the hydrophobic compound react forming the hydrophobically modified RPM capable of adhering to the formation matrix. The resulting polymer, i.e. the hydrophobically modified RPM, inhibits water transport through the formation without substantially interfering with hydrocarbon production.

In such treatments, the gelled well treating fluids are pumped through the wellbore into the subterranean zone or formation to be fractured at a high rate and pressure whereby fractures are formed in the subterranean zone or formation and a propping agent, such as sand is suspended in the crosslinked treating fluid and carried into the fractures and deposited therein. Thereafter, the gelled and crosslinked carrier fluids are caused to break, i.e., revert to a thin fluid capable of flowing out of the fractures while leaving the proppant therein. Preferably, the time necessary to break the gel is less than or equal to the time of any necessary shut-in period. Production of hydrocarbons then may be initiated from the fracture stimulated treated subterranean formations.

In another embodiment, the method for treating a subterranean formation penetrated by a wellbore comprises the steps of preparing an aqueous treating fluid (which optionally can be gelled) comprising a pre-reacted hydrophobically modified RPM and preparing a proppant laden, crosslinked, gelled aqueous treatment fluid. Optionally, the aqueous treating fluid may contain a proppant. The prepared fluids are pumped into the subterranean formation at rates and pressures sufficient to fracture the formation. The hydrophobically modified RPM adheres to the matrix and thereby inhibits water transport through the formation without substantially interfering with hydrocarbon production. Preferably, the concentration of the pre-reacted hydrophobically modified RPM in the aqueous treating fluid ranges from about 0.05% to about 1.0% by weight.

In such treatments, the gelled well treating fluids are pumped through the wellbore into the subterranean zone or formation to be fractured at a sufficient rate and pressure to fracture the subterranean zone or formation. During the fracturing process a propping agent, such as sand, suspended in the crosslinked treating fluid is carried into the fractures and deposited therein. Thereafter, the gelled and crosslinked carrier fluids are caused to break, i.e., revert to a thin fluid capable of flowing out of the fractures while leaving the proppant therein. Production of hydrocarbons then may be initiated from the fracture stimulated treated subterranean formations.

In contrast to the method described above wherein a hydrophilic reactive polymer reacts in situ with a hydrophilic compound, the embodiment utilizing the pre-reacted hydrophobically modified RPM does not require the addition of a surfactant. Further addition of a pH adjusting agent is not necessary. Additionally, this embodiment of the current invention does not require shutting in the well for a period of time to permit the in situ generation of the hydrophobically modified RPM. In all other aspects, the embodiment of the current invention utilizing the pre-reacted hydrophobically modified RPM may be practiced in the same manner as described above relating to the in situ reaction of a hydrophilic reactive polymer and a hydrophobic compound.

The current invention additionally provides methods for re-stimulating producing formations. As is known to those skilled in the art, the percentage of water produced with hydrocarbons frequently increases over the life of a subterranean formation. Additionally, certain wells provide the opportunity for extending the reach of the existing propped fracture. The presence of hydrocarbons in the water producing zones frequently precludes the use of known permeability modifying compounds. However, the compositions and methods of the current invention have been shown to effectively reduce formation permeability to water without negatively impacting hydrocarbon production.

In general, the methods for re-stimulating production are practiced as described above, except in this instance a propped fracture is already in existence. Accordingly, the re-stimulation process requires pumping the aqueous well treatment solution of hydrophilic reactive polymer and hydrophobic compound or the solution containing the pre-reacted hydrophobically modified RPM at sufficient pressure and rate to re-open and preferably extend the fracture. Preferably, the aqueous well treatment solution is followed with a crosslinked proppant laden fluid to help hold the fracture open once the pressure is relieved. Alternatively, the solutions of the current invention may contain a proppant.

Thus, the aqueous well treatment solutions described above are suitable for fracture stimulation or re-stimulation of a hydrocarbon producing formation. In the case of a re-stimulation, the existing fracture face and the newly created fracture face will be treated by the resulting relative permeability modifier generated in situ by the aqueous solution of the current invention or by the pre-reacted hydrophobically modified RPM. Thus, the re-stimulation process will simultaneously improve production of hydrocarbons while reducing or eliminating the production of water from the treated portion of the formation.

In order to further illustrate the compositions and methods of the present invention, the following examples are provided.

### Example 1

A multi-pressure tap Hassler sleeve containing a Berea sandstone core was utilized to determine the water permeability reduction produced by the in-situ reaction of polydimethylaminoethyl methacrylate with cetyl bromide. The permeability reduction tests were run at a temperature of 200° F utilizing a brine containing 9% by weight sodium chloride and 1% by weight calcium chloride.

The following procedure was utilized for a first series of tests, the results of which are provided below in Table I. The above described brine was flowed through the Berea core, followed by oil (kerosene), followed by brine. This third brine flow was maintained until the pressure stabilized, yielding an initial brine permeability. A treatment solution, consisting of 100 mL of a solution of polydimethylaminoethyl methacrylate, cetyl bromide and cetyltrimethylammonium bromide dissolved in 2% KCl brine at pH 12, was flowed into the core. The core was then shut-in for approximately 24 hours to allow reaction of the polymer and cetyl bromide. Following this shut-in period, brine flow was re-established until the pressure stabilized, yielding a final permeability. The percent brine permeability reduction was calculated using the formula [1-(final permeability/initial permeability)]x100. The multi-pressure tap Hassler sleeve allowed the core permeability to be divided into four segments. In the tests, the initial brine flow was from segment 1 to segment 4. The treatment solution flow was from segment 4 to segment 1, and the final brine flow was from segment 1 to segment 4. The initial and final permeabilities were calculated for the middle two segments, i.e., segments 2 and 3. In addition, the overall, or total core permeability is also calculated. The results of the tests are set forth in Table I below. The results of the in-situ reaction treatment as provided in Table I clearly demonstrate the ability of the current invention to reduce the brine permeability of a formation.

**TABLE I**

| Test # | Polymer | Cetyl Bromide | Cetyl trimethyl ammonium bromide | Total Brine Permeability Reduction | Segment 2 Brine Permeability Reduction | Segment 3 Brine Permeability Reduction |
|---|---|---|---|---|---|---|
| 1 | 0.7% | 0.08% | 0.05% | 50% | 32% | 32% |
| 2 | 1.1% | 0.1% | 0.07% | 70% | 61% | 74% |

### Example 2

The tests described in Table I were repeated using different flow sequences and a "parallel" core setup. In the parallel setup, two Berea cores were connected during the treatment phase such that the treatment has equal opportunity to flow into either core. In this test, the flow sequence for the first core, designated the "water" core, was simply brine-treatment-brine. In the second core, designated the "oil" core, the flow sequence was brine-oil-brine-oil-treatment-oil. The flow sequences on these two cores prior to the treatment phase were carried out separately, that is, during this step the cores were not connected. This step determined the initial brine and oil permeabilities. The cores were connected for the treatment phase, then disconnected for the final brine and oil flow. The results from the final brine and oil flow were used to determine the final brine and oil permeabilities. The percent permeability reductions were calculated as discussed in Example I.

In this test, the treatment consisted of a pre-formed hydrophobically modified polydimethylaminoethyl methacrylate formulated in a typical fracturing fluid. The fluid contained 0.2% of the pre-formed hydrophobically modified polydimethylaminoethyl methacrylate and 0.3% of a guar gelling agent, as well as biocides, buffers, breakers and other additives well known to those skilled in the art. A total of 25 mL of this treatment solution was pumped into the two cores in the parallel setup. Of the total 25 mL of treatment, 16 mL entered the water core and 9 mL entered the oil core. This test is intended to exhibit the effect of the polymer on water producing and oil producing zones when placed in a fracturing fluid. The results of the tests are set forth in Table II below. From Table II, it can be seen that the treatment did result in significant permeability reduction to the water core, with very little permeability reduction to the oil core.

**TABLE II**

| Core | Total Permeability Reduction | Segment 2 Permeability Reduction | Segment 3 Permeability Reduction |
|---|---|---|---|
| Water | 59% | 22% | 55% |
| Oil | 0 | 0 | 22% |

The foregoing test results demonstrate the ability of the reactive polymers to selectively reduce core permeability to water flow while not preventing oil flow through the various core samples.

Other embodiments of the current invention will be apparent to those skilled in the art from a consideration of this specification or practice of the invention disclosed herein. However, the foregoing specification is considered merely exemplary of the current invention with the true scope and spirit of the invention being indicated by the following claims.

## Claims

1. An aqueous well treatment solution comprising:
a hydrophobically modified, water soluble relative permeability modifier wherein the hydrophobically modified, water soluble relative permeability modifier comprises 0.05% to 1.0% by weight of the aqueous well treatment solution; and
a hydrated galactomannan gelling agent comprising 0.06% to 0.72% by weight of the aqueous solution.

2. An aqueous well treatment fluid according to claim 1, wherein the hydrated galactomannan gelling agent is selected from the group consisting of guar, hydroxyethylguar, hydroxypropylguar, carboxymethylguar, carboxymethylhydroxyethylguar and carboxymethylhydroxypropylguar.

3. An aqueous well treatment fluid according to claim 1 or 2, wherein the hydrophobically modified, water soluble relative permeability modifier comprises a hydrophilic portion selected from the group consisting of polyethyleneimine, polyvinylamine, poly(vinylamine/vinyl alcohol), chitosan, polylysine; and
a hydrophobic portion wherein the hydrophobic portion is an alkyl chain having from 6 to 30 carbons.

4. An aqueous well treatment fluid according to claim 1, 2 or 3, wherein the hydrophobically modified, water soluble relative permeability modifier comprises at least one hydrophilic monomer selected from the group consisting of:
acrylamide, 2-acrylamido-2-methyl propane sulfonic acid,
N,N-dimethylacrylamide,
vinyl pyrrolidone,
dimethylaminoethyl methacrylate,
acrylic acid,
dimethylaminopropylmethacrylamide,
trimethylammoniumethyl methacrylate chloride,
methacrylamide
hydroxyethyl acrylate; and
at least one monomer selected from the group consisting of:
alkyl acrylates,
alkyl methacrylates,
alkyl acrylamides
alkyl methacrylamides wherein the alkyl radicals have from 4 to 22 carbon atoms, alkyl dimethylammoniumethyl methacrylate bromide,
alkyl dimethylammoniumethyl methacrylate chloride and
alkyl dimethylammoniumethyl methacrylate iodide wherein the alkyl radicals have from 4 to 22 carbon atoms and
alkyl dimethylammonium-propylmethacrylamide bromide,
alkyl dimethylammonium propylmethacrylamide chloride and
alkyl dimethylammonium-propylmethacrylamide iodide wherein the alkyl groups have from 4 to 22 carbon atoms.

5. An aqueous well treatment fluid according to any previous claim, further comprising one or more salts for inhibiting the swelling of clays in a subterranean formation.

6. An aqueous well treatment fluid according to any previous claim, further comprising a proppant.

7. An aqueous well treatment fluid according to any previous claim, comprising a pH in the range of about 4 to about 8.

8. A method for stimulating or re-stimulating hydrocarbon production from a subterranean formation penetrated by a wellbore and for reducing the water permeability of the subterranean formation comprising the steps of:
pumping an aqueous well treatment solution comprising a hydrophobically modified, water soluble relative permeability modifier through the wellbore at a rate and pressure sufficient to fracture the formation.

9. A method according to claim 8, further comprising the step of gelling the hydrophobically modified, water soluble relative permeability modifier by addition of a hydrated galactomannan gelling agent selected from the group consisting of guar, hydroxyethylguar, hydroxypropylguar, carboxymethylguar, carboxymethylhydroxyethylguar and carboxymethylhydroxypropylguar.

10. A method according to claim 8 or 9, further comprising the step of pumping a crosslinked gelled fluid into the formation after the hydrophobically modified, water soluble relative permeability modifier.

11. A method according to claim 8, 9 or 10, wherein the hydrophobically modified, water soluble relative permeability modifier is the reaction product of a hydrophilic reactive polymer and a hydrophobic compound.

12. A method according to any of claims 8 to 11, wherein the hydrophobic compound is selected from the group consisting of alkyl halides wherein the alkyl chain portion has from 6 to 30 carbons.

13. A method according to any of claims 9 to 12, wherein the hydrophobically modified, water soluble relative permeability modifier comprises a hydrophilic portion selected from the group consisting of polyethyleneimine, polyvinylamine, poly(vinylamine/vinyl alcohol), chitosan, polylysine and
a hydrophobic portion wherein the hydrophobic portion is an alkyl chain having from 6 to 30 carbons.

14. A method according to any of claims 10 to 13, further comprising the step of pumping sufficient aqueous solution into the resulting fracture to reduce formation permeability to water.

15. A method according to any of claims 10 to 14, wherein the hydrophobically modified, water soluble relative permeability modifier comprises at least one hydrophilic monomer selected from the group consisting of:
acrylamide, 2-acrylamido-2-methyl propane sulfonic acid,
N,N-dimethylacrylamide,
vinyl pyrrolidone,
dimethylaminoethyl methacrylate,
acrylic acid,
dimethylaminopropylmethacrylamide,
trimethylammoniumethyl methacrylate chloride,
methacrylamide
hydroxyethyl acrylate; and
at least one monomer selected from the group consisting of:
alkyl acrylates,
alkyl methacrylates,
alkyl acrylamides
alkyl methacrylamides wherein the alkyl radicals have from 4 to 22 carbon atoms, alkyl dimethylammoniumethyl methacrylate bromide,
alkyl dimethylammoniumethyl methacrylate chloride and
alkyl dimethylammoniumethyl methacrylate iodide wherein the alkyl radicals have from 4 to 22 carbon atoms and
alkyl dimethylammonium-propylmethacrylamide bromide,
alkyl dimethylammonium propylmethacrylamide chloride and
alkyl dimethylammonium-propylmethacrylamide iodide wherein the alkyl groups have from 4 to 22 carbon atoms.
